**Europäisches Patentamt**

**European Patent Office**  (11) Publication number: **0 196 048**

**Office européen des brevets**  **A2**

(19)

## (12) EUROPEAN PATENT APPLICATION

(21) Application number: **86104012.9**  (51) Int. Cl.⁴: **A 01 G 13/02**

(22) Date of filing: **24.03.86**

(30) Priority: **27.03.85  IT 3067185 U**

(71) Applicant: **P.A.T.I. S.p.A., Via Beltramini 50/52, 31020 S. Zenone Degli Ezzelini Treviso (IT)**

(43) Date of publication of application: **01.10.86 Bulletin 86/40**

(72) Inventor: **Zanon, Domenico, Via Vallorgana 20, I-31020 San Zenone Degli Ezzelini Trev. (IT)**

(74) Representative: **Modiano, Guido et al, MODIANO, JOSIF, PISANTY & STAUB Modiano & Associati Via Meravigli, 16, I-20123 Milan (IT)**

(84) Designated Contracting States: **AT BE CH DE FR GB LI LU NL SE**

(54) **Plastic sheet-like structure particularly for protecting crops, orchards and the like.**

(57) The sheet-like structure (1) is made of at least partially transparent material and has a plurality of holes (2) each having a diameter in the 10 to 20 mm range and being grouped regularly into two lateral bands (3), extending parallel to the longitudinal direction of the sheet (1) at a density per square metre in the range of 100 holes per m² to 500 holes per m². The structure further comprises strengthening ribs (6) of increased thickness extending along the centreline and longitudinal edges thereof.

"PLASTIC SHEET-LIKE STRUCTURE PARTICULARLY FOR
PROTECTING CROPS, ORCHARDS AND THE LIKE"

This invention relates to a plastic sheet-like structure particularly for protecting crops , orchards, and the like.

Within the frame of an agricultural activity administered in conformity with an up-to-date management techniques,it becomes necessary to pursue continued updating of the growing techniques, directed to enhance the crop qualitative and quantitative virtues and to expand the trading calendar of the produce.

A long-since used method of advancing harvesting is that of forcing or force growing the crop under shelters, which to yield best results requires, however, observance within the shelters of several microclimatic factors; regular unfolding of all the vital phases of the plant is, in fact, a direct outcome of favourable climatic conditions within the shelter.

Known and generally employed to construct such shelters are continuous plastic sheets which, being formed for example from vinyl polychloride or ethyl vinyl acetate, by utilising the so-called "hothouse effect" and "thermal seal" phenomenon, can maintain under the shelter a higher temperature than the ambient temperature.

Shelters formed with known sheets are not, however, devoid of shortcomings, especially in springtime, during which is a wide daily temperature range in the shelter due to high temperature increases, especially on sunny days, followed by quick temperature drops at night.

By way of example, it may be recalled that the most delicate time in force growing under cover, for example, table grapes coincides with vine sprouting which generally begins, in the areas of Mid- and Southern Italy, in February, at which time there occur, in the involved areas, the greatest temperature differences between day and night.

The use of such known types of covers results, moreover, similarly to the above considerations regarding temperature differences, in sudden rises and changes in air humidity, with adverse effects on production.

Taking once again a vine crop as a reference, it may be recalled that, while the ideal growth condition is represented by constant relative humidity values in the order of 60-65%, damper air can make pollen heavy and inhibit anemophilic fecundation of flowers.

To obviate such drawbacks due to the use of known covering sheets, it has been necessary in the past to provide the shelters with sophisticated mechanisms capable of temporarily lifting off the covering sheets during the day. Such lifting mechanisms are made indispensable to provide an appropriate ventilation to prevent the inside temperature from reaching high values and to allow some control of the hygrometric value of air; it is also necessary to lift off the shelter-forming sheets to permit flower pollination, lacking which no normal fecundation of the fruit is possible.

As is apparent, additionally to resulting in a more complex construction, and related increased cost, such ventilation mechanisms must be operated regularly in order to continuously monitor the micro-climatic conditions inside the shelter, which is time- and labour-consuming.

It is a primary aim of this invention to provide a material particularly for use in protecting crops, orchards, and the like, which maintains inside the shelter the best conditions of humidity, light exposure, and temperature for proper performance of the plant's vegetative functions.

Within the above aim, it is a particular object of the invention to provide a plastic sheet, which in addition to affording maximum transparency to solar radiation can keep the air temperature nearly constant inside said shelter, thus preventing detrimental sudden temperature changes.

Another object of the invention is to provide a material, adapted for use in the construction of any types of agricultural shelters, which owing to its particular structural characteristics is effective to ensure attainment of the most appropriate ventilation, and hence, humidity and temperature values, creates the basis for perfect pollination, a basic condition for regular advanced and abundant ripening of the fruits.

The above aim, as well as the cited and other objects to become apparent hereinafter, are achieved by a plastic sheet-like structure, particularly for protecting crops, orchards and the like, characterized in that it has a plurality of holes arranged regularly at two lateral bands substantially parallel to the longitudinal direction of said sheets.

Further features and advantages will be more clearly apparent from a detailed description of a sheet according to the invention, shown by way of illustration in the accompanying drawing, where:

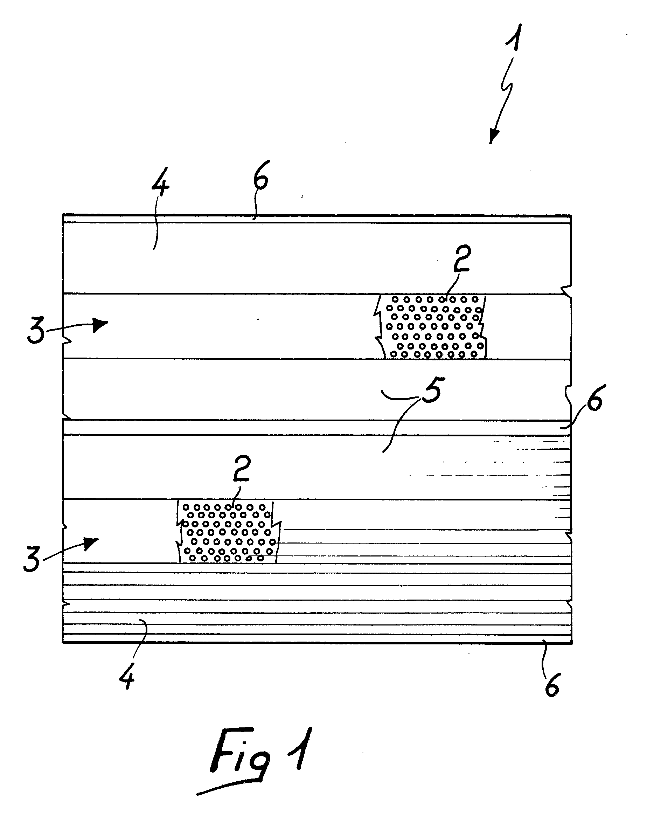

Figure 1 is a plan view of the sheet-like structure;

Figure 2 is a simplified view of a shelter with a crowned roof, incorporating the sheet-like structure according to the invention; and

Figure 3 is a simplified view of a pitched roof shelter, incorporating the sheet-like structure according to the invention.

With reference to the drawing figures, the sheet-like structure, generally indicated at 1, is preferably formed of transparent plastic material and has, according to the invention, a plurality of holes 2 grouped regularly in two lateral bands 3.

Advantageously, the lateral bands 3 extend parallel to the longitudinal direction of the sheet 1, being arranged symmetrically about the centre line thereof, or in some other way dependent on the agronomical requirements, thereby the sheet 1 has, additionally to the cited lateral bands 3, two outer flaps 4 and a middle portion 5.

It should be further specified that along the longitudinal edges and the centre line the sheet 1 expediently has strengthening ribs 6 of increased thickness with respect to the remaining constant thickness areas of the sheet 1.

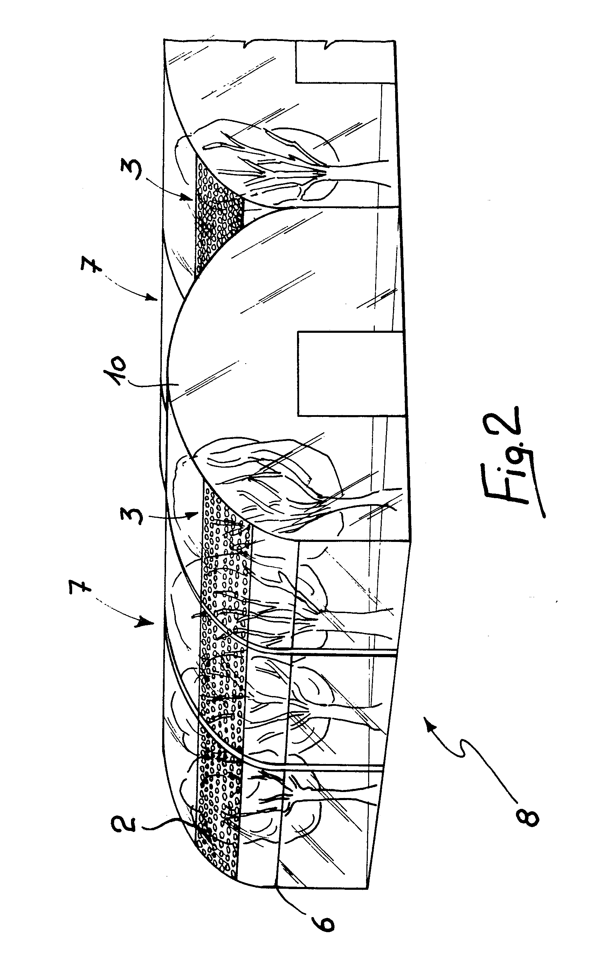

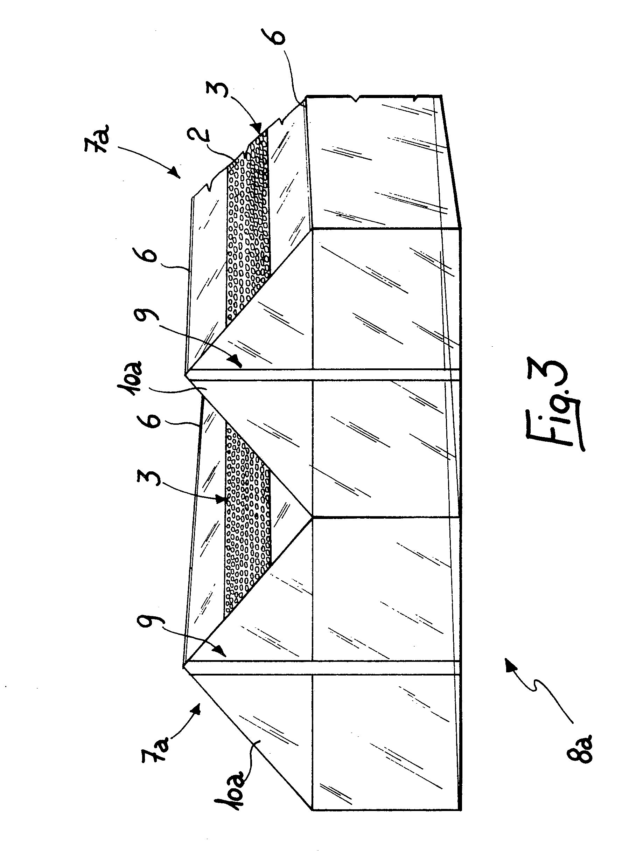

The sheet 1 is advantageously used to make the roof 7 of a shelter 8 similar to the prior ones. In particular the roof 7, which may be a crown mono-pitched or multi-pitched roof as shown in Figures 2 and 3, respectively, comprises the sheet laid parallel to the longitudinal direction of the shelter 8, thereby the side bands 3 keep at the same elevation from the ground and parallel to the ridge 10 of the shelter.

The strengthening ribs 6 are, therefore, particularly useful to both secure the longitudinal edges of the sheet, e.g. by pinching or the provision of metal eyelets, and strengthen the sheet centreline which generally rests on a wire connecting the tops of the supporting posts 9.

The use of apertured sheets according to the invention, besides affording the advantages of "transparency" and "thermal sealing" like a solid sheet, prevents the inside temperature from rising high on sunny days while reducing the thermal ranges consequent to temperature drops during the night and the coldest hours of the day; thus, the hygrometric grade of air is also controlled and maintained at approximately constant values. In fact, the holes are sized and arranged so as to prevent both meteoric agents from entering the shelter and outside air from flowing directly into the lower portion of the shelter, but on the contrary, they favour cooling of the mass of hot and damp air stagnating in the ridge 10 of the roof 7 and the consequent establishment of convective motions which take the upper air down which has been so cooled and urge the air upwards which, in the lower portion of the shelter, has been heated in the meantime.

The continuous air movement thus maintains balanced temperatures inside the shelter which may vary depending on areas and sun exposure in the 18° to 24°C range, and in no case above about 32°C, at hygrometric values of air which may be in the order of 60-65% relative humidity, for example, while constant ventilation of the shelter has been ensured, a basic requirement for perfect pollination.

It has been ascertained in practice that the use of sheets according to the invention affords, in addition to all the advantages of an integral covering with a thermal sheet, the achievement, particularly at the most critical cultivating phases, of the most appropriate climatic and ventilation conditions without resorting to complex and expensive ventilating mechanisms.

Merely by way of example, as particularly suitable uses one could mention advancing both table grapes and peaches and generic fruits, as well as protecting and advancing kiwis and in general all those fruits requiring controlled climatic characteristics.

Of course, both the hole diameters and their concentration and distribution may be expressedly studied to meet specific application requirements originating from both the crop being treated and the site; also merely by way of example, in order to prevent penetration by meteoric agents while attaining the most appropriate interior ventilation and climatic condition values particularly advantageous have been found to be holes 2 with a diameter in the 10 to 20 mm range, distributed in one or two lateral bands 3 at a density per square metre in the 100 to 500 holes per m$^2$ range.

While best results have been obtained with sheets formed from copolymers of vinyl ethylene acetate wherein the vinyl acetate combined with ethylene in the ratio ranging from 10% to 18%, the constituent material may be any one, such as vinyl polychloride or polyethylene, depending on requirements and the state of the art.

## CLAIMS

1. A sheet-like cover structure particularly for protecting crops, orchards and the like, characterized in that it has a plurality of holes arranged regularly at two lateral bands extending substantially parallel to the longitudinal direction of said sheet.

2. A structure according to Claim 1, in which the sheet-like cover is made of at least partially transparent material, characterized in that said lateral bands are substantially symmetrical about the longitudinal axis of said sheet.

3. A structure according to one or more of the preceding claims, characterized in that it has at least one asymmetric perforated band arranged to suit the structure type and the crop variety which it is desired to protect.

4. A structure according to one or more of the preceding claims, characterized in that said holes have a diameter in the 10 to 20 mm range.

5. A structure according to one or more of the preceding claims, characterized in that said holes are present in said lateral bands at a density per square metre in the range from 100 holes per $m^2$ to 500 holes per $m^2$.

6. A structure according to one or more of the preceding claims, characterized in that it comprises, at the longitudinal edges and at said longitudinal axis, strengthening or connecting reinforcements.

7. A structure according to Claim 5, characterized in that said reinforcements comprise increased thickness ribs.

8. A structure according to one or more of the preceding claims, characterized in that it is formed from copolymers of vinyl ethylene acetate or PVC.

9. A structure according to Claim 8, characterized in that the vinyl acetate combines with the ethylene in a ratio varying from 10% to 18%.

10. A shelter for protecting crops, in particular orchards, characterized in that it comprises at least one sheet-like structure according to one or more of the preceding claims.

*Fig 1*

Fig.2

Fig.3

0 196 048